# EUROPÄISCHE PATENTSCHRIFT

(11) **EP 0 894 059 B1**
(45) Veröffentlichungstag und Bekanntmachung des Hinweises auf die Patenterteilung: **11.09.2002**
(21) Anmeldenummer: 97918125.2
(22) Anmeldetag: 10.04.1997
(51) Int. Cl.: B60T 8/00

(54) **BREMSANLAGE MIT ELEKTRONISCHER BREMSKRAFTVERTEILUNG**
BRAKING SYSTEM WITH ELECTRONIC BRAKING FORCE DISTRIBUTION
SYSTEME DE FREINAGE A REPARTITION ELECTRONIQUE DE LA FORCE DE FREINAGE

(30) Priorität: 16.04.1996 DE 19614908
(43) Veröffentlichungstag der Anmeldung: 03.02.1999
(73) Patentinhaber: Continental Teves AG & Co. oHG, 60488 Frankfurt (DE)
(72) Erfinder: PRÖGER, Thomas, D-63322 Rödermark 1 (DE); ZENZEN, Markus, D-65795 Hattersheim 2 (DE)
(74) Vertreter: Blum, Klaus-Dieter
(86) Internationale Anmeldenummer: EP9701768
(87) Internationale Veröffentlichungsnummer: WO97038881

(56) Entgegenhaltungen:
- EP-A- 0 546 948
- DE-A- 3 133 442
- DE-A- 4 414 980
- GB-A- 2 135 413

## Beschreibung

Die vorliegende Erfindung betrifft eine Bremsanlage mit elektronischer Bremskraftverteilung gemäß dem Oberbegriff des Anspruchs 1.

Eine derartige Bremsanlage ist beispielsweise aus der DE 43 37 498 A1 bekannt. Die bekannte Bremsanlage regelt die am Hinterrad angelegte Bremskraft in einer Beziehung zu der am Vorderrad angelegten Bremskraft, um eine ideale Bremskraftverteilung zu gewährleisten. Druckregelventile sind in einem hydraulischen Kreis angeordnet, der den Hauptzylinder der Bremsanlage mit den Hinterradbremsen verbindet. Vorgesehen ist eine Hilfsleistungsquelle zur Abgabe eines Leistungsdruckes und ein hydraulischer Verstärker zur Regulierung des Bremsdruckes und zur Betätigung des Hauptzylinders. Zwischen dem Hauptzylinder und den Regelventilen ist ein Umschaltventil angeordnet und wahlweise in eine erste Betriebsstellung bringbar zur Verbindung der Regelventile mit dem Hauptzylinder und zur Sperrung der Verbindung zwischen den Regelventilen und dem hydraulischen Verstärker sowie in eine zweite Betriebsstellung zur Verbindung der Regelventile mit dem hydraulischen Verstärker und zur Sperrung der Verbindung zwischen den Regelventilen und dem Hauptzylinder. Wenn das Umschaltventil von der ersten Betriebsstellung in die zweite Betriebsstellung versetzt wird, dann regeln die Regelventile den hydraulischen Druck in den Hinterradzylindern entsprechend der vorgegebenen Beziehung zum Vorderradbremsdruck. Der Eintritt in diese Regelung ist abhängig davon, ob eine bestimmte Startbedingung erfüllt ist oder nicht. Dabei müssen bestimmte Kriterien gegeben sein: Der Bremslichtschalter muß eingeschaltet sein, die Fahrzeuggeschwindigkeit muß einen bestimmten Schwellenwert überschritten und die Fahrzeugbeschleunigung einen bestimmten negativen Schwellenwert unterschritten haben, und schließlich muß die Radgeschwindigkeit des Hinterrades, dessen Bremsdruck geregelt werden soll, die Radgeschwindigkeit des vor ihm liegenden Vorderrades um einen bestimmten Betrag unterschreiten. Sind diese Bedingungen erfüllt, setzt die elektronische Bremskraftverteilung ein. Sie wird dann abgebrochen, wenn entweder der Bremslichtschalter ausgeschaltet wird, was bedeutet, daß der Fahrer den Fuß vom Bremspedal genommen hat, oder wenn die Fahrzeugbeschleunigung einen negativen Schwellenwert von 0,25g überschreitet.

Eine elektronische Bremskraftverteilung sollte immer nur dann erfolgen, wenn sie erforderlich ist. Sicherlich ist daher ein Austrittskriterium, welches unabhängig von der Stellung des Bremslichtschalters ist, eine sinnvolle Ergänzung. Allerdings ist die Berechnung einer Fahrzeugbeschleunigung bei sehr geringen Radgeschwindigkeiten sehr fehlerbehaftet, da die Radsensoren bei niedrigen Geschwindigkeiten keine exakten Werte über die Fahrzeuggeschwindigkeit abgeben. Dann ist das verzögerungsabhängige Kriterium nur mit großer Streuung anwendbar. Außerdem gibt es Bremsanlagen, deren Startbedingungen für den Eintritt in eine elektronische Bremskraftverteilung unabhängig davon sind, ob eine pedalbetätigte Bremsung vorliegt oder nicht. Unter Umständen erfolgt also dann ein Eintritt in die elektronische Bremskraftverteilung beim Durchfahren eines Schlagloches oder einer anderen Fahrbahnstörung, welche sich auf eine Einzelradgeschwindigkeit ausgewirkt hat. Bei derartigen Eintrittskriterien müssen auch Austrittskriterien gewählt werden, die nicht an das Lösen eines Bremspedals gebunden sind. Auch im Berufsverkehr beispielsweise ist es denkbar, daß der Fahrer im "Stop-and-go-Verkehr" zwar zeitweilig stark verzögert hat und somit eine elektronische Bremskraftverteilung ausgelöst hat, nach einer Zielbremsung jedoch den Fuß nicht vom Bremspedal nimmt und somit einen vom Bremslichtschalter abhängigen Austritt unmöglich macht. Schließlich ist es noch denkbar, daß ein defekter Bremslichtschalter nicht erkannt wird oder aber aufgrund eines defekten Bremslichtschalters nicht erkannt wird, daß der Fahrer eine pedalbetätigte Bremsung bereits beendet hat, so daß die elektronische Bremskraftverteilung unnötig lange andauert. Dies könnte beispielsweise dann der Fall sein, wenn durch das Motorschleppmoment ohne Betätigung des Bremspedals eine spürbare Verzögerung des Fahrzeugs erfolgt, so daß der Beschleunigungsschwellenwert nicht überschritten wird.

Um auch in solchen Fällen einen Austritt aus der elektronischen Bremskraftverteilung zu bewirken und eine unnötige Ventilbetätigung zu vermeiden, liegt der vorliegenden Erfindung die Aufgabe zugrunde, eine Bremsanlage der eingangs genannten Art zu schaffen, welche einen Austritt aus der elektronischen Bremskraftverteilung unabhängig von der Betätigung des Bremspedals und unabhängig vom Überschreiten einer bestimmten Fahrzeugbeschleunigung veranlaßt, wenn eine Druckminderung an den Hinterachsbremsen nicht erforderlich ist.

Diese Aufgabe wird gelöst in Verbindung mit den kennzeichnenden Merkmalen des Anspruchs 1. Das Prinzip der Erfindung besteht darin, daß die Bremsanlage die elektronische Bremskraftverteilung schon dann abbricht, wenn nach einer detektierten maximalen Verzögerung, also minimalen Fahrzeugbeschleunigung, die Fahrzeugbeschleunigung deutlich größer geworden ist. Es wird also nicht ein fester Schwellenwert der Fahrzeugbeschleunigung gewählt, sondern ein vom Ablauf des Bremsvorgangs abhänngiger. Ein derartiger sog. "fast exit" ermöglicht es, die elektronische Bremskraftverteilung so schnell wie möglich zu verlassen, wenn eine elektronische Regelung nicht mehr notwendig ist. Dadurch wird beim Betätigen oder beim Nachtreten des Bremspedals auch an den Radbremsen der Hinterachse eine Bremsdruckerhöhung sichergestellt. Unnötige Ventiltätigkeiten werden auf diese Weise vermieden. Ein derartiger Austritt funktioniert sowohl bei intaktem als auch bei defektem Bremslichtschalter, ohne daß sich das Fahrergefühl am Bremspedal verschlechtert.

Es sollte allerdings sichergestellt sein, daß sich die Bremsanlage nicht gerade in einer Druckabbauphase befindet, in welcher an der Hinterachse ein verhältnismäßig großer Bremsschlupf vorliegt. Wenn dann nämlich ein Austritt aus der elektronischen Bremskraftverteilung vorgenommen wird, besteht die Gefahr, daß die Hinterräder blockieren.

Das erfindungsgemäße Austrittskriterium empfiehlt sich insbesondere bei Fahrzeuggeschwindigkeiten, die die Schrittgeschwindigkeit übersteigen. Bei niedrigen Geschwindigkeiten ist die Fahrzeuggeschwindigkeit und somit die daraus berechnete Beschleunigung relativ fehlerbehaftet.

Wenn die Austrittsschwelle aus der elektronischen Bremskraftverteilung bei etwa der Hälfte bis zu vier Fünfteln der maximalen Verzögerung, also der minimalen Beschleunigung während des Bremsvorgangs liegt, ist sichergestellt, daß im Teilbremsbereich die Gefahr einer Unterbremsung des Fahrzeugs durch geschlossene Einlaßventile an der Hinterachse vermieden wird. Bei geschlossenen Einlaßventilen an der Hinterachse sind nämlich höhere Pedalkräfte notwendig, um die gewünschte Fahrzeugverzögerung nur durch die Bremskraft der Vorderräder zu erzielen. Derartige Bremsvorgänge führen zu einem erhöhten Belagverschleiß an den Radbremsen der Vorderachse.

Im folgenden sei ein Ausführungsbeispiel der Erfindung beschrieben. Angenommen, eine Bremsanlage trete in die elektronische Bremskraftverteilung ein unabhängig vom Signal des Bremslichtschalters. Dies kann regulär geschehen aufgrund einer bestimmten Fahrzeugverzögerung, bei welcher sich zumindest ein Hinterrad im Vergleich zur Fahrzeug-Referenzgeschwindigkeit oder zur Geschwindigkeit des vor ihm liegenden Vorderrades zu langsam bewegt. Die Bremsanlage tritt also in die elektronische Bremskraftverteilung ein und senkt beispielsweise durch Öffnung eines Auslaßventils den Bremsdruck am betroffenen Hinterrad. Nach Stabilisierung der Raddrehzahl des betroffenen Hinterrades schließt sich eine Druckhaltephase und später eine Druckaufbauphase an. Sei es nun, daß der Bremslichtschalter des Fahrzeugs schon vor der Bremsung oder während der Bremsung beschädigt wurde.

Dann wäre es für eine Bremsanlage gemäß dem Stand der Technik nicht möglich zu erkennen, ob der Fahrer mittlerweile vom Bremspedal gegangen ist, solange die Fahrzeugbeschleunigung noch keinen betragsmäßig sehr kleinen, negativen Schwellenwert überschritten hat. Das Kriterium, daß ein Wechsel des Bremslichtschaltersignals erfaßt wird, ist nun, da der Bremslichtschalter defekt ist, nicht anwendbar. Bei Bremsanlagen gemäß dem Stand der Technik hält also eine elektronische Bremskraftverteilung unnötig lange an und bedingt eine Vielzahl von Ventilschaltungen, wobei bei geschlossenen Einlaßventilen ein zusätzlicher Bremsdruckaufbau durch eine pedalbetätigte Bremsung nicht möglich ist.

Die Erfindung beugt dem dadurch vor, daß während der elektronischen Regelung der Bremskraftverteilung die Fahrzeugverzögerung, also die negative Fahrzeugbeschleunigung, erfaßt wird. Der Extremwert wird abgespeichert. Ist dann die Fahrzeugverzögerung auf etwa 2/3 der Maximalverzögerung gesunken und liegt zu dieser Zeit keine Druckabbauphase vor, so wird die elektronische Bremskraftverteilung abgebrochen. Hintergrund hierbei ist, daß auf diese Weise frühzeitig erkannt wird, daß der Fahrer von der Bremse gegangen ist und somit ein schneller Austritt aus der elektronischen Bremskraftverteilung erfolgen kann. Allerdings ist ein solcher Austritt nur bei Fahrzeuggeschwindigkeiten empfehlenswert, die mehr als 5 km/h betragen. Bei niedrigeren Geschwindigkeiten ist ein solches Kriterium nach Möglichkeit nicht anzuwenden, weil beim Anhalten beispielsweise vor einer Ampel, wenn das Bremspedal weiter betätigt ist, dieses plötzlich durchfällt, weil schlagartig alle Einlaßventile geöffnet werden.

Es empfiehlt sich zusätzlich als Mindestverzögerung eine Schwelle von 0,4 g oder anders ausgedrückt eine maximale Fahrzeugbeschleunigung von -0,4 g, um das erfindungsgemäße Austrittskriterium anzuwenden. Die Fahrzeugbeschleunigung ist bei niedrigen Werten sicherlich einer Streuung von 0,1 g unterworfen. Läge die maximale Beschleunigung für die Anwendung des erfindungsgemmäßen Austrittskriteriums beispielsweise bei -0,3 g, dann wäre es möglich, daß der Austritt durch diese Streuung bei -0,2 g erfolgt, wenn die tatsächliche minimale Beschleunigung also nur -0,3g betrug. Das bedeutet aber, daß bei der Bremsung das Fahrzeug nie stark verzögert wurde und noch eine starke Bremsung folgen könnte, bei welcher die elektronische Bremskraftverteilung notwendig bleibt.

## Patentansprüche

1. Bremsanlage für ein zweiachsiges Fahrzeug mit Mitteln zur elektronischen Bremskraftverteilung durch Änderung des Bremsdruckes der Hinterachsbremsen nach Maßgabe einer elektronischen Steuereinrichtung, wobei die elektronische Bremskraftverteilung zumindest zwischen Druckaufbauphasen und Druckabbauphasen unterscheidet, **dadurch gekennzeichnet, daß** die elektronische Bremskraftverteilung abgeschaltet wird, wenn die Fahrzeugbeschleunigung größer wird als k * aₘᵢₙ, wobei k ein Faktor 0 ≤ k < 1 und aₘᵢₙ die während der elektronischen Bremskraftverteilung aufgetretene minimale Fahrzeugbeschleunigung ist.

2. Bremsanlage nach Anspruch 1, **dadurch gekennzeichnet, daß** diese Abschaltung dann nicht erfolgt, wenn sich die elektronische Bremskraftverteilung in einer Druckabbauphase befindet.

3. Bremsanlage nach Anspruch 1 oder 2, **dadurch gekennzeichnet, daß** der Austritt nur dann erfolgt, wenn die Fahrzeuggeschwindigkeit größer ist als ein bestimmter Minimalwert.

4. Bremsanlage nach Anspruch 3, **dadurch gekennzeichnet, daß** der bestimmte Minimalwert zwischen 4 und 10 km/h liegt.

5. Bremsanlage nach einem der vorhergehenden Ansprüche, **dadurch gekennzeichnet, daß** k zwischen 0,5 und 0,8 liegt.

## Claims

1. Brake system for a two-axle vehicle including means for the electronic brake force distribution by varying the braking pressure of the rear-axle brakes according to an electronic control device, wherein the electronic brake force distribution distinguishes at least between phases of pressure increase and phases of pressure decrease,
**characterized in that** the electronic brake force distribution is deactivated when the vehicle acceleration exceeds k * aₘᵢₙ, wherein k is a factor 0 ≤ k < 1 and aₘᵢₙ is the minimum vehicle acceleration occurring during electronic brake force distribution.

2. Brake system as claimed in claim 1,
**characterized in that** the deactivation is prevented when the electronic brake force distribution is in a phase of pressure decrease.

3. Brake system as claimed in claim 1 or claim 2,
**characterized in that** the deactivation occurs only if the vehicle speed exceeds a defined minimum value.

4. Brake system as claimed in claim 3,
**characterized in that** the defined minimum value ranges between 4 and 10 km/h.

5. Brake system as claimed in any one of the preceding claims,
**characterized in that** 'k' ranges between 0.5 and 0.8.

## Revendications

1. Système de freinage pour un véhicule à deux essieux comportant des moyens de répartition électronique de la force de freinage par variation de la pression de freinage des freins de l'essieu arrière, sous la conduite d'un dispositif électronique de commande, la répartition électronique de la force de freinage faisant la distinction au moins entre des phases de montée de la pression et des phases de réduction de la pression, **caractérisé en ce que** la répartition électronique de la force de freinage est désactivée lorsque l'accélération du véhicule devient supérieure à k * aₘᵢₙ, k étant un facteur 0 ≤ k< 1 et aₘᵢₙ étant l'accélération minimale du véhicule survenant pendant la répartition électronique de la force de freinage.

2. Système de freinage selon la revendication 1, **caractérisé en ce que** cette désactivation n'intervient pas lorsque la répartition électronique de la force de freinage se trouve dans une phase de montée en pression.

3. Système de freinage selon la revendication 1 ou 2, **caractérisé en ce que** la sortie n'intervient que si la vitesse du véhicule est supérieure à une valeur minimale déterminée.

4. Système de freinage selon la revendication 3, **caractérisé en ce que** la valeur minimale déterminée est comprise entre 4 et 10 km/heure.

5. Système de freinage selon l'une des revendications précédentes, **caractérisé en ce que** k se situe entre 0,5 et 0,8.
